# EUROPEAN PATENT APPLICATION

(11) **EP 4 424 918 A1**
(43) Date of publication of application: **04.09.2024**
(21) Application number: 24158787.2
(22) Date of filing: 21.02.2024
(51) Int. Cl.: E02F 3/32, E02F 9/08, E02F 9/20, B60L 58/26, H01M 10/613, B60H 1/00

(54) **WORK MACHINE**

(30) Priority: 01.03.2023 JP 2023030808
(71) Applicant: Yanmar Holdings Co., Ltd., Osaka-shi, Osaka (JP)
(72) Inventor: NOMURA, Kotaro, Chikugo-shi (JP); TERASHIMA, Jun, Chikugo-shi (JP)
(74) Representative: Dennemeyer & Associates S.A.

(57) **Abstract**

[Problem] To provide a work machine enabling easy maintenance of a battery unit.

[Solution] A work machine includes a battery unit, a pipe which is connected to the battery unit and through which a heat exchange medium flows, and a heat exchanger to which the pipe is connected. The heat exchanger is disposed on a side opposite to a side of the battery unit which is connected to the pipe, with respect to the battery unit.

## Description

### TECHNICAL FIELD

The present invention relates to a work machine.

### BACKGROUND ART

Conventionally, there is proposed an electric hydraulic excavator in which a plurality of air-cooled battery units are disposed in a box body (see Patent Document 1, for example).

### PRIOR ART DOCUMENT

### PATENT DOCUMENT

Patent Document 1: International Publication No. WO2021/059514

### SUMMARY OF INVENTION

### TECHNICAL PROBLEM

In a configuration for air-cooling a battery unit, it is difficult to adjust (for example, cool) the temperature of a battery unit to an appropriate temperature range in a short time. Therefore, in recent years, a water-cooling method using a heat exchange medium such as cooling water is often employed as a method for cooling the battery unit. A pipe that circulates a heat exchange medium between a heat exchanger such as a radiator and the battery unit is provided, so that the battery unit can be cooled to an appropriate temperature in a short time.

However, in a case where the water-cooling method is employed, for example, when the connection part of the battery unit to the pipe is located on the heat exchanger side, maintenance such as inspection of the connection part may be difficult to perform due to presence of the heat exchanger.

The present invention has been made to solve the above-described problem, and an object of the present invention is to provide a work machine capable of facilitating maintenance of a battery unit.

### SOLUTION TO PROBLEM

A work machine according to one aspect of the present invention includes: a battery unit; a pipe which is connected to the battery unit and through which a heat exchange medium flows; and a heat exchanger to which the pipe is connected, and the heat exchanger is disposed on a side opposite to a side of the battery unit which is connected to the pipe, with respect to the battery unit.

### ADVANTAGEOUS EFFECTS OF INVENTION

According to the above configuration, it is possible to facilitate maintenance of a battery unit.

### BRIEF DESCRIPTION OF DRAWINGS

FIG. 1 is a side view illustrating a schematic configuration of a hydraulic excavator which is an example of an electric work machine according to an embodiment of the present invention;
FIG. 2 is a block diagram schematically illustrating a configuration of an electric system and a hydraulic system of the hydraulic excavator;
FIG. 3 is a perspective view illustrating an internal configuration of an engine room of the hydraulic excavator;
FIG. 4 is a perspective view of a main part in the engine room as viewed from the right back side;
FIG. 5 is a perspective view of the main part as viewed from the left back side;
FIG. 6 is a plan view of the main part;
FIG. 7 is a perspective view illustrating another example of routing of a pipe in the hydraulic excavator;
FIG. 8 is a block diagram illustrating a configuration of the hydraulic excavator in which the pipe is routed as illustrated in FIG. 7, together with the flow direction of a heat exchange medium during cooling of the battery unit; and
FIG. 9 is a block diagram illustrating the configuration of the hydraulic excavator together with the flow direction of the heat exchange medium during heating of the battery unit.

### DESCRIPTION OF EMBODIMENTS

The following is description of embodiments of the present invention based on the drawings.

### [1. Configuration of Hydraulic Excavator]

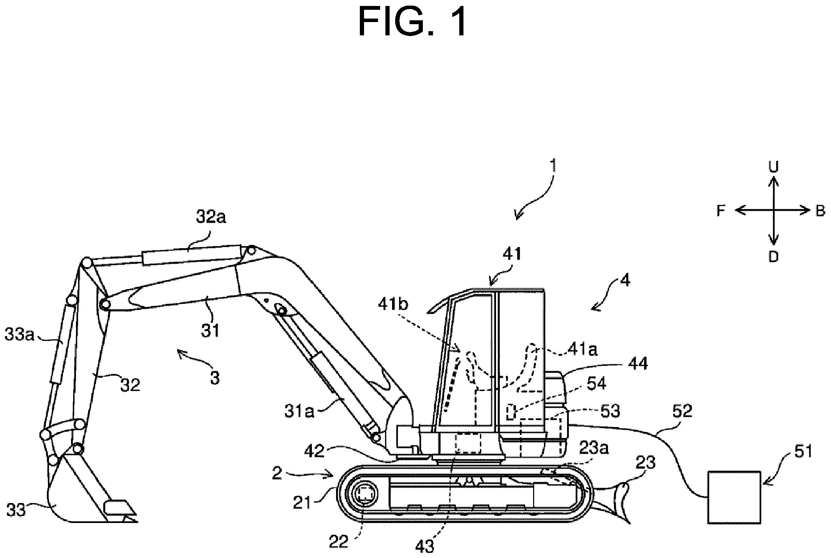

FIG. 1 is a side view illustrating a schematic configuration of an electric hydraulic excavator 1 which is an example of a work machine of this embodiment. The hydraulic excavator 1 includes a lower traveling body 2, a work machine 3, and an upper turning body 4. In this embodiment, the hydraulic excavator 1 or the upper turning body 4 (particularly, an engine room 44) is also referred to as a "machine body".

For convenience of the following description, directions are defined as follows. The direction in which an operator (a manipulator, a driver) seated on a driver's seat 41a of the upper turning body 4 faces front is defined as the forward direction, and the direction opposite to the forward direction is defined as the backward direction. Therefore, in a state in which the upper turning body 4 does not turn with respect to the lower traveling body 2 (turning angle: 0°), a front-back direction of the upper turning body 4 coincides with the direction in which the lower traveling body 2 moves forward and backward. As viewed from the operator seated on the driver's seat 41a, the left side is defined as the "left" and the right side is defined as the "right". The gravity direction perpendicular to the front-back direction and the left-right direction is defined as the up-down direction, in which the upstream side of the gravity direction is defined as the "up", and the downstream side thereof is defined as the "down". In the drawings, the hydraulic excavator 1 is illustrated in a state in which the upper turning body 4 does not turn with respect to the lower traveling body 2. Further, in the drawings, when necessary, the forward direction is denoted by "F", the backward direction is denoted by "B", the rightward direction is denoted by "R", the leftward direction is denoted by "L", the upward direction is denoted by "U", and the downward direction is denoted by "D".

The lower traveling body 2 includes a pair of left and right crawlers 21 and a pair of left and right traveling motors 22. Each of the traveling motors 22 is a hydraulic motor. The left and right traveling motors 22 drive the left and right crawlers 21, respectively, so that the hydraulic excavator 1 can be moved forward and backward. The lower traveling body 2 is provided with a blade 23 for performing ground leveling work and a blade cylinder 23a. The blade cylinder 23a is a hydraulic cylinder that rotates the blade 23 in the up-down direction.

The work machine 3 includes a boom 31, an arm 32, and a bucket 33. The boom 31, the arm 32, and the bucket 33 are independently driven, so that it is possible to perform excavation work of earth, sand, and the like.

The boom 31 is rotated by the boom cylinder 31a. The boom cylinder 31a has a base end supported by a front part of the upper turning body 4, and is movable freely in an extendable and retractable manner. The arm 32 is rotated by an arm cylinder 32a. The arm cylinder 32a has a base end supported by the boom 31, and is movable freely in an extendable and retractable manner. The bucket 33 is rotated by a bucket cylinder 33a. The bucket cylinder 33a has a base end supported by the arm 32, and is movable freely in an extendable and retractable manner. The boom cylinder 31a, the arm cylinder 32a, and the bucket cylinder 33a are each composed of a hydraulic cylinder.

The upper turning body 4 is located above the lower traveling body 2, and is provided so as to be turnable via a turning bearing (not illustrated) with respect to the lower traveling body 2. In the upper turning body 4, a steering part 41, a turning frame 42, a turning motor 43, an engine room 44, and the like are disposed. The upper turning body 4 turns via the turning bearing by the driving of the turning motor 43 which is a hydraulic motor.

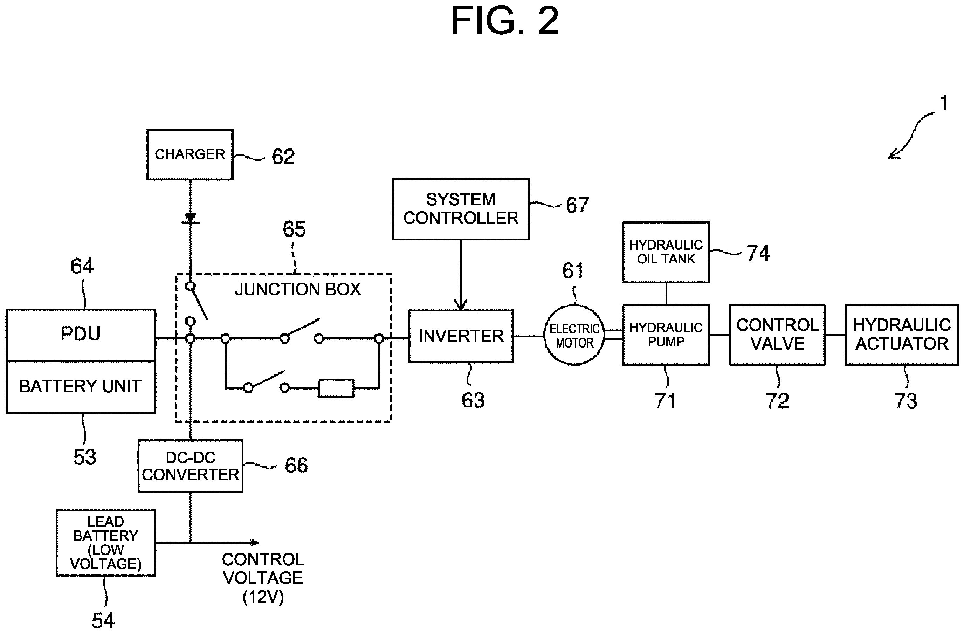

In the upper turning body 4, hydraulic pumps 71 (see FIG. 2) are disposed. The hydraulic pumps 71 are driven by an electric motor 61 (see FIG. 2) inside the engine room 44. The hydraulic pumps 71 supply hydraulic oil (pressure oil) to hydraulic motors (for example, the left and right traveling motors 22 and the turning motor 43), and hydraulic cylinders (for example, the blade cylinder 23a, the boom cylinder 31a, the arm cylinder 32a, and the bucket cylinder 33a). The hydraulic motors and the hydraulic cylinders that are driven with the hydraulic oil supplied from the hydraulic pumps 71 are collectively referred to as a hydraulic actuator 73 (see FIG. 2).

In the steering part 41, the driver's seat 41a is disposed. Various levers 41b are disposed around the driver's seat 41a. An operator is seated on the driver's seat 41a and operates the levers 41b, so that the hydraulic actuator 73 is driven. Consequently, it is possible to perform traveling of the lower traveling body 2, ground leveling work by the blade 23, excavation work by the work machine 3, turning of the upper turning body 4, and the like.

In the upper turning body 4, battery units 53 are disposed. Each battery unit 53 is composed of, for example, a lithium-ion battery unit, and stores electric power for driving the electric motor 61. The battery unit 53 may be composed of a plurality of batteries as a unit or may be composed of a single battery cell. In the upper turning body 4, a power supply port, not illustrated, is provided. The power supply port and a commercial power source 51 which is an external power source are connected via a power supply cable 52. Consequently, the battery unit 53 can be charged.

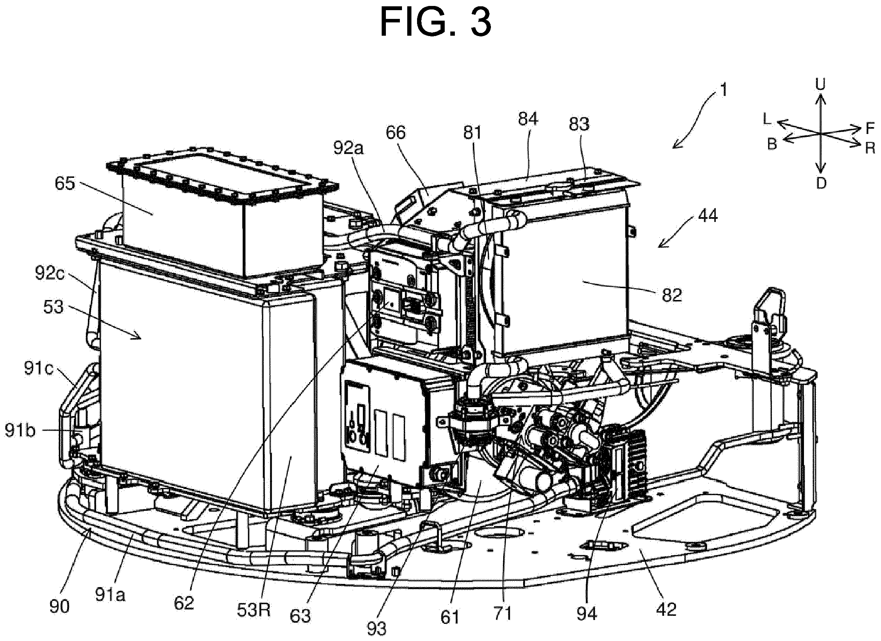

In the upper turning body 4, a lead battery 54 is further provided. The lead battery 54 outputs a low-voltage (12 V, for example) DC voltage. The output from the lead battery 54 is supplied as a control voltage to, for example, a system controller 67 (see FIG. 2), a drive unit of a fan 81 (see FIG. 3 and the like), and the like.

The hydraulic excavator 1 may be configured to be a combination of a hydraulic device such as the hydraulic actuator 73 and an actuator driven by electric power. Examples of the actuator driven by electric power include an electric traveling motor, an electric cylinder, and an electric turning motor.

### [2. Configuration of Electric System and Hydraulic System]

FIG. 2 is a block diagram schematically illustrating configurations of an electric system and a hydraulic system of the hydraulic excavator 1. The hydraulic excavator 1 includes the electric motor 61, a charger 62, an inverter 63, a Power Drive Unit (PDU) 64, a junction box 65, and a DC-DC converter 66, and the system controller 67. The system controller 67 is composed of an electronic control unit which is also referred to as an ECU (Electronic Control Unit), and electrically controls each part of the hydraulic excavator 1.

The electric motor 61 is driven by electric power supplied from each battery unit 53 via the junction box 65 and the inverter 63. The electric motor 61 is composed of a permanent magnet motor or an induction motor. The electric motor 61 is disposed on the turning frame 42 (see FIG. 1).

The charger 62 (also referred to as a power supplier) converts an AC voltage supplied from the commercial power source 51, illustrated in FIG. 1, via the power supply cable 52 into a DC voltage. The inverter 63 converts a DC voltage supplied from the battery units 53 into an AC voltage and supplies the AC voltage to the electric motor 61. Consequently, the electric motor 61 is rotated. The AC voltage (current) is supplied from the inverter 63 to the electric motor 61 on the basis of a rotation command output from the system controller 67.

The PDU 64 is a battery control unit that controls an internal battery relay to control inputting and outputting of the battery units 53. The junction box 65 includes a charger relay, an inverter relay, a fuse and the like. The voltage output from the charger 62 is supplied to the battery unit 53 via the junction box 65 and the PDU 64. Further, the voltage output from the battery units 53 is supplied to the inverter 63 via the PDU 64 and the junction box 65.

The DC-DC converter 66 lowers a high-voltage (300 V, for example) DC voltage supplied from the battery units 53 via the junction box 65 to a low voltage (12 V, for example). Similar to the output from the lead battery 54, the voltage output from the DC-DC converter 66 is supplied to the system controller 67, the drive unit of the fan 81, and the like.

A plurality of the hydraulic pumps 71 is connected to a rotation shaft (output shaft) of the electric motor 61. The plurality of hydraulic pumps 71 include a variable displacement pump and a fixed displacement pump. FIG. 2 illustrates only the single hydraulic pump 71 as an example. Each hydraulic pump 71 is connected to a hydraulic oil tank 74 that contains (stores) hydraulic oil. When the hydraulic pump 71 is driven by the electric motor 61, the hydraulic oil in the hydraulic oil tank 74 is supplied to the hydraulic actuator 73 via a control valve 72. Consequently, the hydraulic actuator 73 is driven. The control valve 72 is a direction switching valve that controls the flow direction and the flow rate of the hydraulic oil to be supplied to the hydraulic actuator 73.

### [3. Internal Configuration of Engine Room]

FIG. 3 is a perspective view illustrating an internal configuration of the engine room 44 of the hydraulic excavator 1. The hydraulic excavator 1 includes the fan 81. The fan 81 takes outside air into the inside of the machine body by rotation. That is, the fan 81 of this embodiment is of a suction type. A rotation shaft of the fan 81 extends in the left-right direction of the machine body. The hydraulic pumps 71 are located below the fan 81. Each hydraulic pump 71 is connected to the hydraulic oil tank 74 (see FIG. 2) via a hydraulic hose (not illustrated).

The hydraulic excavator 1 includes a radiator 82. The radiator 82 is a heat exchanger that cools a heat exchange medium by heat exchange. The heat exchange medium is, for example, cooling water, but may be a refrigerant other than cooling water. The radiator 82 is disposed on the right side of the machine body with respect to the fan 81.

An oil cooler 83 is disposed on the left side of the machine body with respect to the fan 81, that is, on the side opposite to the radiator 82 with respect to the fan 81. The oil cooler 83 is connected to an oil path through which oil circulates via the hydraulic pumps 71, the hydraulic actuator 73 (see FIG. 2), and the like. The oil cooler 83 cools, by heat exchange, the hydraulic oil flowing in the oil path by driving of the hydraulic pump 71.

The oil cooler 83 is disposed so as to overlap with a portion of the fan 81 when viewed from the rotation shaft direction of the fan 81.

A wind guide part 84 is disposed on the left side of the machine body with respect to the oil cooler 83, that is, on the side opposite to the fan 81 with respect to the oil cooler 83. The electric motor 61 is disposed below the wind guide part 84. The hydraulic pump 71 is disposed on the right side of the machine body with respect to the electric motor 61.

The fan 81 is of a suction type as described above, and therefore when the fan 81 is rotated, outside air is sucked from the outside of the machine body toward the inside of the machine body, flows through the inside of the wind guide part 84, and is discharged to the outside of the machine body. The radiator 82 and the oil cooler 83 are disposed in the middle of a flow path of the outside air, and therefore the radiator 82 and the oil cooler 83 are sequentially cooled by the sucked outside air. In addition, the electric motor 61 is disposed below the wind guide part 84, and therefore the electric motor 61 is cooled by wind discharged from the wind guide part 84. Further, as illustrated in FIG. 3, the charger 62 and the DC-DC converter 66 are disposed on a side wall of the wind guide part 84, and therefore the charger 62 and the DC-DC converter 66 are also cooled by wind flowing inside the wind guide part 84.

The arrangement of the fan 81, the radiator 82, and the oil cooler 83 described above is an example, and is not limited to the arrangement of this embodiment. Therefore, the arrangement of the fan 81, the radiator 82, and the oil cooler 83 is devised, so that the fan 81 can be configured as a discharge type to cool the radiator 82 and the oil cooler 83.

### [4. Positional Relationship between Heat Exchanger and Battery Unit and Routing of Pipe]

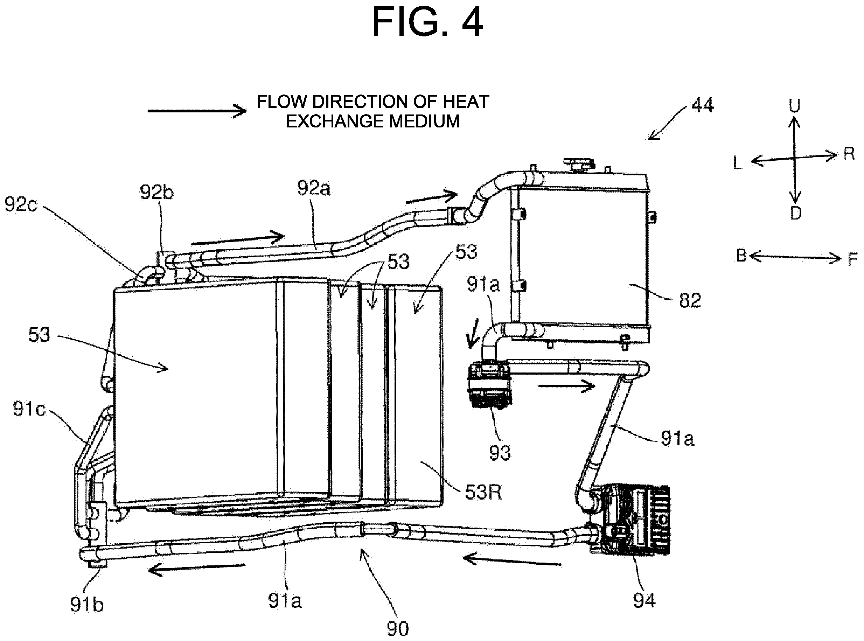

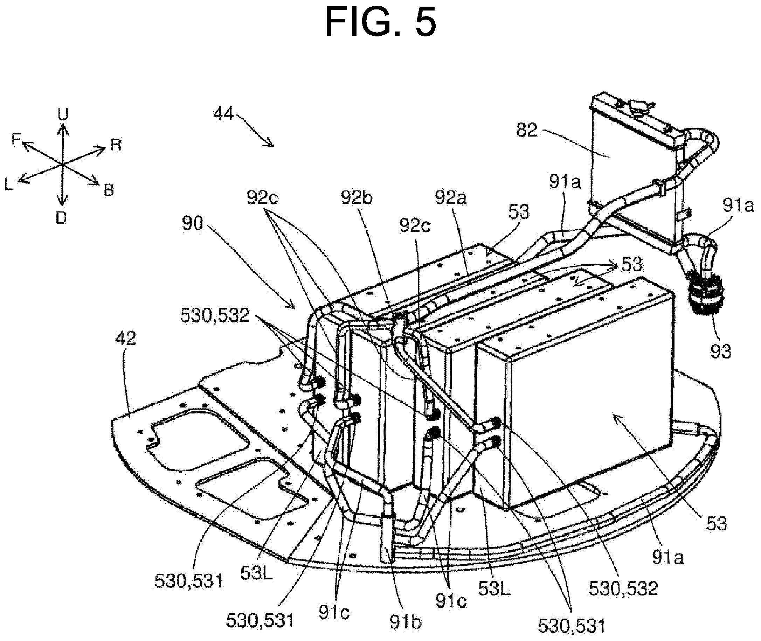

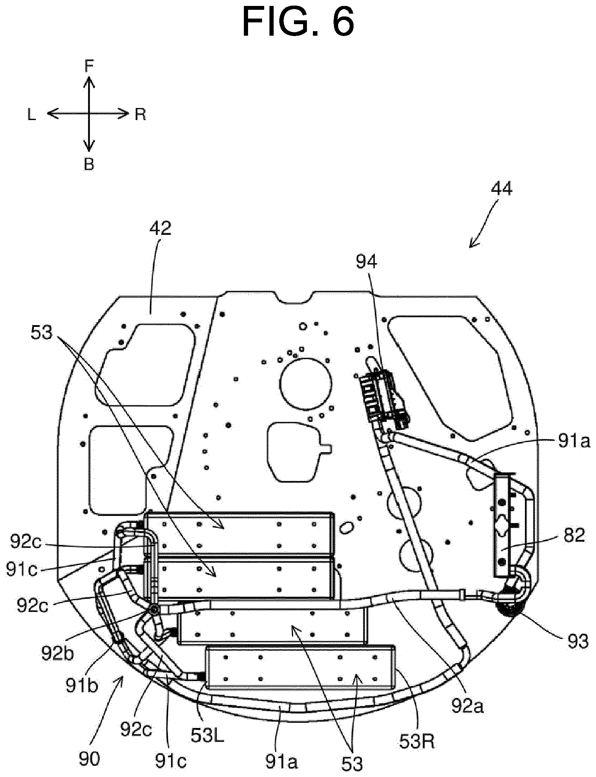

FIG. 4 is a perspective view of a main part in the engine room 44 illustrated in FIG. 3 when viewed from the right back. FIG. 5 is a perspective view of the main part as viewed from the left back side. FIG. 6 is a plan view of the main part. Herein, the above main part refers to a pipe 90 through which the heat exchange medium flows and a member to which the pipe 90 is connected.

As illustrated in FIG. 4 to FIG. 6, the hydraulic excavator 1 includes a plurality of the battery units 53 described above. In this embodiment, the hydraulic excavator 1 includes the four battery units 53, but the number of the battery units 53 is not particularly limited. As illustrated in FIG. 6, the four battery units 53 are supported in a vibration-proof manner on the turning frame 42 such that the longitudinal direction of each battery unit 53 is the machine body left-right direction in a plan view, and are arranged side by side in the machine body front-back direction. The battery units 53 and the radiator 82 are connected by the pipe 90. That is, the hydraulic excavator 1 includes the pipe 90 which is connected to the battery units 53 and through which the heat exchange medium flow, and the radiator 82 as a heat exchanger to which the pipe 90 is connected. The pipe 90 is formed of, for example, a resin hose, but may be configured to at least partially include a metal pipe, a metal joint, or the like. A detailed configuration of the pipe 90 will be described later.

As illustrated in FIG. 5, each battery unit 53 has a connection port 530 on a left side surface 53L. The pipe 90 is connected to the connection ports 530. That is, each battery unit 53 has the connection port 530 to which the pipe 90 is connected, on the left side surface 53L which is one side surface thereof.

As illustrated in FIG. 5 and FIG. 6, the radiator 82 is disposed on the side (for example, the right side of the machine body) opposite to the side (for example, the left side of the machine body) of the battery units 53 which is connected to the pipe 90, with respect to the battery units 53. With such a positional relationship between the radiator 82 and the battery units 53, maintenance of the battery units 53 can be performed from the side opposite to the side on which the radiator 82 is disposed (from the left side of the vehicle body). For example, the maintenance of the battery units 53 can be performed by removing a left bonnet (not illustrated) serving as the side wall of the engine room 44. In this case, the above maintenance can be performed without being hindered by the radiator 82, and therefore the maintenance is facilitated. The maintenance includes connection and disconnection of the pipe 90 to and from the battery units 53, inspection and confirmation of the connection part between each battery unit 53 and the pipe 90, and the like.

In particular, from a viewpoint of facilitating the maintenance of the battery units 53 in the vicinities of the connection ports 530, it is desirable that the maintenance of each battery unit 53 can be performed from the side of the left side surface 53L on which the connection port 530 is provided. In this respect, as illustrated in FIG. 5 and the like, it is desirable that the radiator 82 is disposed on the side surface (right side surface 53L) side opposite to the above one side surface (left side surface 53R) of each battery unit 53 (in particular, see FIG. 4 and FIG. 6).

As illustrated in FIG. 5, the connection port 530 of each battery unit 53 includes a first connection port 531 and a second connection port 532. Both the first connection port 531 and the second connection port 532 are provided on the left side surface 53L of each battery unit 53. On each left side surface 53L, the first connection port 531 and the second connection port 532 are disposed side by side in the up-down direction. Specifically, the second connection port 532 is located above the first connection port 531.

From the viewpoint of enabling the maintenance of the first connection port 531 and the second connection port 532 to be collectively performed, it is desirable that the plurality of connection ports 530 each including the first connection port 531 and the second connection port 532 are provided on the same side surface (the left side surface 53L in the above example) of each battery unit 53.

The first connection port 531 and the second connection port 532 are connected to one end and the other end of a circuit for circulating the heat exchange medium in each battery unit 53, respectively. In this case, as described above, the first connection port 531 and the second connection port 532 are located on the same side surface (the left side surface 53L) of each battery unit 53, and the heat exchange medium can be made to flow into each battery unit 53 from the same side surface side and can be discharged from each battery unit 53 to the same side surface side. Consequently, the configuration of the connection side of the pipe 90 with respect to each battery unit 53 can be made compact by using short pipes (for example, a plurality of first individual pipes 91c and a plurality of second individual pipes 92c which will be described later). Therefore, it is desirable that the first connection port 531 and the second connection port 532 are respectively connected to one end and the other end of the circuit for circulating the heat exchange medium in each battery unit 53 as in this embodiment, from the viewpoint that the circuit for cooling the plurality of battery units 53 can be realized by simple routing of the pipe 90.

The number of the battery units 53 may be one. Even in this case, it is possible to realize a circuit for cooling the battery unit 53 with simple routing of the pipe 90 by disposing the first connection port 531 on the inlet side and the second connection port 532 on the outlet side on one side surface (for example, the left side surface 53L) of the battery unit 53.

Further, as illustrated in FIG. 5 and FIG. 6, in a case where the plurality of battery units 53 are arranged side by side on the turning frame 42, the maintenance of the battery units 53 can be collectively performed from the same side (for example, the left side of the machine body), which is desirable from the viewpoint that the maintenance of the battery units 53 can be efficiently performed. From this viewpoint, it is desirable that the pipe 90 is connected to each of the plurality of battery units 53 on the same side. In other words, it is desirable that the plurality of battery units 53 (in which the connection ports 530 with the pipe 90 are provided) are disposed such that the one side surface (for example, the left side surface 53L) of each battery unit 53 is directed in the same direction (the left direction of the machine body in FIG. 5 and FIG. 6).

Now, the pipe 90 will be described in detail. As illustrated in FIG. 4 to FIG. 6, the pipe 90 has a first common pipe 91a that extends from the radiator 82, and the first individual pipes 91c connected to the first common pipe 91a via a branch part 91b. A plurality of the first individual pipes 91c are provided corresponding to the respective battery units 53, and extend from the respective first connection ports 531 of the plurality of battery units 53. A circulation pump 93 and a heater 94 which will be described later are disposed in the middle of the first common pipe 91a.

The pipe 90 further has a second common pipe 92a that extends from the radiator 82, and the second individual pipes 92c connected to the second common pipe 92a via a merge part 92b. The plurality of second individual pipes 92c are provided corresponding to the respective battery units 53, and extend from the respective second connection ports 532 of the plurality of battery units 53.

In the above configuration of the pipe 90, the heat exchange medium discharged from the radiator 82 flows through the first common pipe 91a, is equally distributed into the four first individual pipes 91c at the branch part 91b, flows into the corresponding battery units 53 from the respective first individual pipes 91c via the first connection ports 531, and cools the battery units 53. The heat exchange medium that flows inside each battery unit 53 flows from the second connection port 532 into the merge part 92b via the second individual pipes 92c, merges with the heat exchange medium flowing from each of the other battery units 53 via the corresponding second individual pipes 92c at the merge part 92b, and then flows in the second common pipe 92a to return to the radiators 82. Thereafter, such circulation of the heat exchange medium is repeated.

From the viewpoint of making the layout of the pipe 90 compact, as in this embodiment, it is desirable to adopt a configuration in which the plurality of first individual pipes 91c connected to the battery units 53 are connected to the single first common pipe 91a via the branch part 91b, and the plurality of second individual pipes 92c connected to the battery units 53 are connected to the single second common pipe 92a via the merge part 92b.

Further, in order to efficiently perform the temperature adjustment (for example, cooling) of the battery unit 53 by the heat exchange medium, it is desirable to fill the inside of each battery unit 53 with the heat exchange medium. For this purpose, it is desirable that air existing in the battery units 53 can easily escape to the outside of the battery units 53. As illustrated in FIG. 4 and FIG. 5, it is desirable that the second common pipe 92a is located above the battery units 53 in that the air in the battery units 53 easily escapes upward and the air is less likely to be accumulated in the battery units 53.

From the viewpoint of effectively using space around the battery units 53 as routing space for the first common pipe 91a, the branch part 91b, and the first individual pipes 91c, as illustrated in FIG. 6, it is desirable that the first common pipe 91a is routed so as to pass through the back side of the machine body of the battery units 53. That is, it is desirable that the first common pipe 91a is routed to pass through the outside of the battery units 53 (to be shifted from the battery units 53) when viewed from above.

As illustrated in FIG. 4 and FIG. 6, the circulation pump 93 is disposed in the middle of the pipe 90 (particularly, the first common pipe 91a). The circulation pump 93 sucks the heat exchange medium cooled by the radiator 82 and pushes the heat exchange medium toward the battery units 53. The circulation pump 93 is disposed below the radiator 82 and disposed on the right side of the machine body with respect to the battery units 53. The circulation pump 93 is disposed on the back side of the machine body with respect to the radiator 82, but may be disposed on the front side of the machine body with respect to the radiator 82.

After flowing through each battery unit 53, the heat exchange medium absorbs the heat of each battery unit 53 and the temperature of the heat exchange medium rises. When the high-temperature heat exchange medium is directly supplied to the circulation pump 93, the circulation pump 93 may be damaged. From the viewpoint of protecting the circulation pump 93 by avoiding damage to the circulation pump 93 due to the supply of the high-temperature heat exchange medium, it is desirable to supply the heat exchange medium cooled by the radiator 82 to the circulation pump 93. In this respect, as illustrated in FIG. 4 and the like, it is desirable that the circulation pump 93 is disposed in the middle of the first common pipe 91a through which the heat exchange medium flows from the radiator 82 toward the battery units 53. That is, it is desirable that the circulation pump 93 is disposed on the downstream side in the flow direction of the heat exchange medium with respect to the radiator 82.

In this embodiment, as illustrated in FIG. 4, the heater 94 is further disposed in the middle of the pipe 90. In particular, in the first common pipe 91a, the heater 94 is disposed on the downstream side in the flow direction of the heat exchange medium with respect to the circulation pump 93. The heater 94 is disposed on the front side of the machine body with respect to the radiator 82, but may be disposed on the back side of the machine body.

In a state in which the heater 94 is turned off (non-energized state), the fan 81 (see FIG. 3) is driven to apply outside air to the radiator 82, so that the heat exchange medium flowing through the radiator 82 can be cooled by heat exchange. In this case, the heat exchange medium at a relatively low temperature can be supplied to the battery unit 53 by the circulation pump 93 to cool the battery units 53. On the other hand, when the heater 94 is energized and turned on in a state in which the driving of the fan 81 is stopped, the heat exchange medium supplied by the circulation pump 93 is heated by the heater 94 and supplied to the battery units 53, so that the battery units 53 can be heated. Therefore, from the viewpoint of enabling the battery units 53 to be used in an appropriate temperature range in cold weather, it is desirable that the heater 94 is disposed in the middle of the pipe 90 as in this embodiment.

### [5. Another Example of Routing of Pipe]

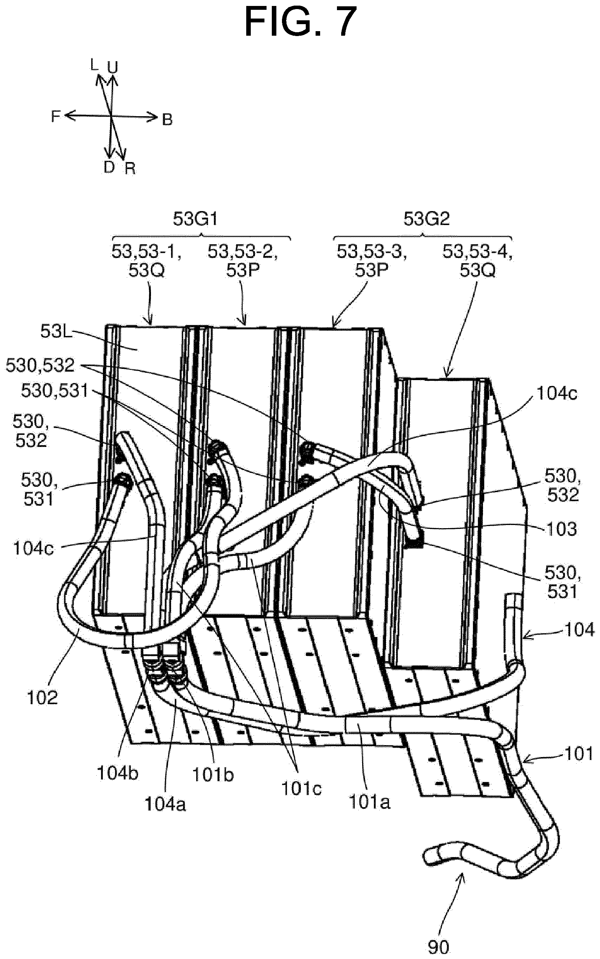

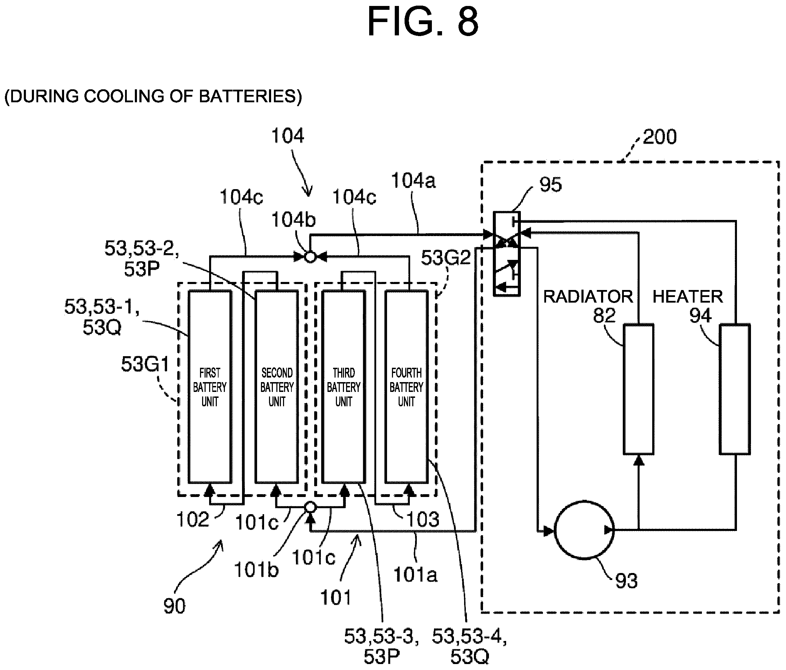

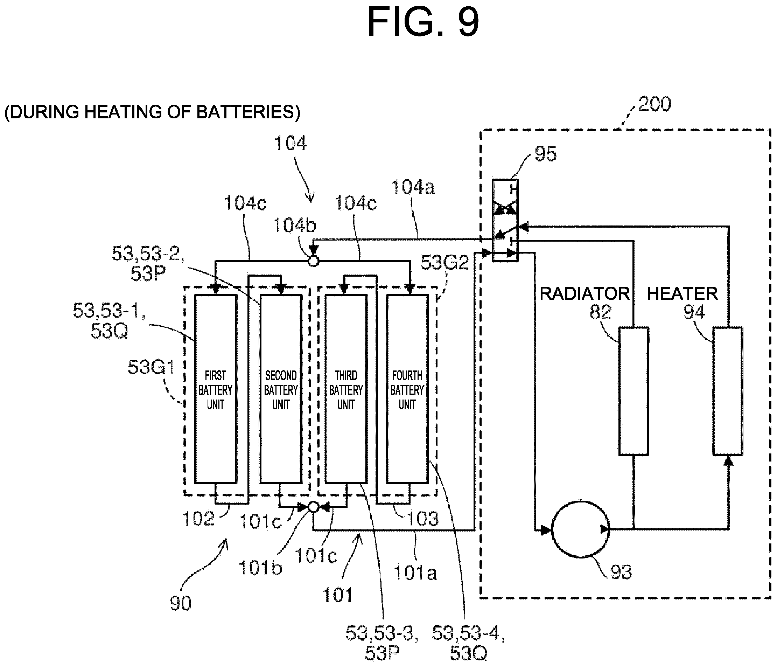

FIG. 7 is a perspective view illustrating another example of the routing of the pipe 90 in the hydraulic excavator 1. FIG. 8 and FIG. 9 are block diagrams each schematically illustrating a configuration of a hydraulic excavator 1 in which a pipe 90 is routed as illustrated in FIG. 7. FIG. 8 also illustrates the flow direction of a heat exchange medium during cooling of battery units 53. FIG. 9 also illustrates the flow direction of the heat exchange medium during heating of the battery units 53.

As illustrated in FIG. 7, the configuration is the same as the configuration illustrated in FIG. 4 and the like in that a plurality of (for example, four) the battery units 53 mounted on the hydraulic excavator 1 are arranged side by side in the machine body front-back direction. In addition, the configuration is the same as the configuration illustrated in FIG. 4 and the like in that each battery unit 53 has a plurality of connection ports 530 (a first connection port 531 and a second connection port 532) on a left side surface 53L. Therefore, also in the configuration illustrated in FIG. 7, the plurality of battery units 53 (provided with the plurality of connection ports 530) are arranged such that one side surface (for example, the left side surface 53L) of each battery unit is directed in the same direction (for example, the machine body left direction).

Herein, for convenience of description below, the four battery units 53 arranged in the machine body front-back direction are also referred to as a first battery unit 53-1, a second battery unit 53-2, a third battery unit 53-3, and a fourth battery unit 53-4 in order from the front side of the machine body toward the back side of the machine body. The first battery unit 53-1 and the second battery unit 53-2 constitute a first battery group 53G1. The third battery unit 53-3 and the fourth battery unit 53-4 constitute a second battery group 53G2. That is, the hydraulic excavator 1 includes the first battery group 53G1 having the plurality of battery units 53 and the second battery group 53G2 having the plurality of battery units 53. The pipe 90 through which a heat exchange medium flows is connected to each battery unit 53.

As illustrated in FIG. 7 to FIG. 9, the pipe 90 includes a first pipe 101, a second pipe 102, a third pipe 103, and a fourth pipe 104.

The first pipe 101 includes a first connection pipe 101a extending from a temperature adjustment circuit 200 (see FIG. 8 and FIG. 9) and a second connection pipe 101c connected to the first connection pipe 101a via a first connection part 101b. The second connection pipe 101c are provided corresponding to the second battery unit 53-2 and the third battery unit 53-3, and extend from the first connection port 531 of the second battery unit 53-2 and the first connection port 531 of the third battery unit 53-3, respectively. That is, the first pipe 101 connects any one of the battery units 53 included in the first battery group 53G1 (herein, the second battery unit 53-2) and any one of the battery units 53 included in the second battery group 53G2 (herein, the third battery unit 53-3) to the temperature adjustment circuit 200.

The temperature adjustment circuit 200 adjusts the temperature of a heat exchange medium flowing through the pipe 90. That is, the hydraulic excavator 1 includes the temperature adjustment circuit 200. Details of the temperature adjustment circuit 200 will be described later.

The second pipe 102 connects the first connection port 531 of the first battery unit 53-1 and the second connection port 532 of the second battery unit 53-2. That is, the second pipe 102 connects the plurality of battery units 53 (herein, the first battery unit 53-1 and the second battery unit 53-2) included in the first battery group 53G1 in series.

The third pipe 103 connects the second connection port 532 of the third battery unit 53-3 and the first connection port 531 of the fourth battery unit 53-4. That is, the third pipe 103 connects the plurality of battery units 53 (herein, the third battery unit 53-3 and the fourth battery unit 53-4) included in the second battery group 53G2 in series.

The fourth pipe 104 includes a third connection pipe 104a extending from the temperature adjustment circuit 200 and a fourth connection pipe 104a connected to the third connection pipe 104c via a second connection part 104b. Fourth connection pipes 104c are provided corresponding to the first battery unit 53-1 and the fourth battery unit 53-4, and extend from the second connection port 532 of the first battery unit 53-1 and the second connection port 532 of the fourth battery unit 53-4, respectively. That is, the fourth pipe 104 connects the other battery unit 53 (herein, the first battery unit 53-1) included in the first battery group 53G1 and the other battery unit 53 (herein, the fourth battery unit 53-4) included in the second battery group 53G2 to the temperature adjustment circuit 200.

The pipe 90 is configured as described above, so that when the heat exchange medium is supplied from the temperature adjustment circuit 200 to the first pipe 101, the heat exchange medium is divided into a first route and a second route, is guided to the fourth pipe 104, and returns to the temperature adjustment circuit 200. Herein, the first route is a route in which the heat exchange medium flows from the first pipe 101 to the fourth pipe 104 through the second battery unit 53-2, the second pipe 102, and the first battery unit 53-1. The second route is a route in which the heat exchange medium flows from the first pipe 101 to the fourth pipe 104 through the third battery unit 53-3, the third pipe 103, and the fourth battery unit 53-4.

Regardless of whether the heat exchange medium flows through the first route or the second route, the heat exchange medium flows through the battery units 53 (the second battery unit 53-2 and the third battery unit 53-3) located on the inner side in the machine body front-back direction, before flowing through the battery units 53 (the first battery unit 53-1 and the fourth battery unit 53-4) located on the outer side in the machine body front-back direction among the plurality of battery units 53. Therefore, it is possible to preferentially adjust (for example, cool) the temperatures of the battery units 53 located on the inner side in the machine body front-back direction.

On the other hand, when the heat exchange medium is supplied from the temperature adjustment circuit 200 to the fourth pipe 104, the heat exchange medium is divided into a third route and a fourth route, guided to the first pipe 101, and returns to the temperature adjustment circuit 200. Herein, the third route is a route in which the heat exchange medium flows from the fourth pipe 104 to the first pipe 101 through the first battery unit 53-1, the second pipe 102, and the second battery unit 53-2. The fourth route is a route in which the heat exchange medium flows from the fourth pipe 104 to the first pipe 101 through the fourth battery unit 53-4, the third pipe 103, and the third battery unit 53-3.

Regardless of whether the heat exchange medium flows through the third route or the fourth route, the heat exchange medium flows through the battery units 53 (the first battery unit 53-1 and the fourth battery unit 53-4) located on the outer side in the machine body front-back direction, before flowing through the battery units 53 (the second battery unit 53-2 and the third battery unit 53-3) located on the inner side in the machine body front-back direction among the plurality of battery units 53. Therefore, the temperatures of the battery units 53 located on the outer side in the machine body front-back direction can be preferentially adjusted (for example, heated).

Thus, the configuration of the pipe 90 illustrated in FIG. 7 is desirable in that the temperature adjustment of some of the battery units 53 among the plurality of battery units 53 can be performed more preferentially than the other battery units 53.

In addition, in the routing of the pipe 90 illustrated in FIG. 7, the adjacent battery units 53 (the first battery unit 53-1 and the second battery unit 53-2) included in the first battery group 53G1 can be connected by the short second pipe 102. Similarly, the adjacent battery units 53 (the third battery unit 53-3 and the fourth battery unit 53-4) included in the second battery group 53G2 can be connected to each other by the short third pipe 103. Consequently, the layout of the pipe 90 can be made compact, and also in this respect, the routing of the pipe 90 illustrated in FIG. 7 is desirable.

Now, the temperature adjustment circuit 200 will be described in detail. As illustrated in FIG. 8 and FIG. 9, the temperature adjustment circuit 200 includes a switching valve 95 in addition to the radiator 82, the circulation pump 93, and the heater 94 described above. The switching valve 95 switches a supply destination of the heat exchange medium from the radiator 82 or the heater 94 between the first pipe 101 and the fourth pipe 104. Such a switching valve 95 is composed of, for example, an electromagnetic valve, but may be composed of a valve that switches the supply destination of the heat exchange medium by manual operation. In the temperature adjustment circuit 200, the radiator 82 and the heater 94 are disposed in parallel. In the temperature adjustment circuit 200, the heat exchange medium flows through the radiator 82 or the heater 94 by the circulation pump 93, and is supplied to the switching valve 95.

Herein, the second battery unit 53-2 to which the first pipe 101 is connected among the plurality of battery units 53 included in the first battery group 53G1 and the third battery unit 53-3 to which the first pipe 101 is connected among the plurality of battery units 53 included in the second battery group 53G2 are each defined as a first pipe connection battery unit 53P. The other first battery unit 53-1 to which the fourth pipe 104 is connected among the plurality of battery units 53 included in the first battery group 53G1 and the other fourth battery unit 53-4 to which the fourth pipe 104 is connected among the plurality of battery units 53 included in the second battery group 53G2 are each defined as a fourth pipe connection battery unit 53Q. As illustrated in FIG. 7, the two first pipe connection battery units 53P are disposed between the two fourth pipe connection battery units 53Q in the machine body front-back direction.

In a case where the plurality of battery units 53 are arranged side by side in the machine body front-back direction, when each of the battery units 53 generates heat due to use, heat dissipation is likely to progress in the battery units 53 (for example, the first battery unit 53-1 and the fourth battery unit 53-4) located near both ends in the alignment direction. On the other hand, in the battery units 53 (for example, the second battery unit 53-2 and the third battery unit 53-3) located near the center in the alignment direction, heat dissipation does not easily proceed, and heat is likely to be confined.

As described above, the two first pipe connection battery units 53P are disposed between the two fourth pipe connection battery units 53Q. Consequently, the (low-temperature) heat transfer medium immediately after being cooled by the radiators 82 included in the temperature adjustment circuit 200 can be supplied to the first pipe connection battery units 53P via the first pipe 101 before being supplied to the fourth pipe connection battery units 53Q, so that the first pipe connection battery units 53P in which heat is likely to be confined can be preferentially cooled.

On the other hand, in cold weather, the battery units 53 (for example, the first battery unit 53-1 and the fourth battery unit 53-4) located near the both ends in the alignment direction are more likely to be deprived of heat and to decrease in the temperatures than the battery units 53 (for example, the second battery unit 53-2 and the third battery unit 53-3) located near the center in the alignment direction.

The two fourth pipe connection battery units 53Q are located outside the two first pipe connection battery units 53P in the alignment direction. Therefore, the heat exchange medium heated by the heater 94 can be supplied to the fourth pipe connection battery units 53Q via the fourth pipe 104 before being supplied to the first pipe connection battery units 53P, so that the fourth pipe connection battery units 53Q, the temperatures of which are likely to be lowered in cold weather, can be preferentially heated.

Thus, it is desirable that the two first pipe connection battery units 53P are disposed between the two fourth pipe connection battery units 53Q, from the viewpoint of switching the battery units 53 to which the heat exchange medium is preferentially supplied in consideration of the difference in the degree of heat dissipation depending on the arrangement positions of the plurality of battery units 53, realizing a uniform temperature in the plurality of battery units 53 as a whole, and making the degree of deterioration of the battery units 53 uniform.

In particular, from the viewpoint of enabling the first pipe connection battery units 53P, in which heat is likely to be confined, to be cooled more preferentially than the fourth pipe connection battery units 53Q, it is desirable that the switching valve 95 switches the supply destination of the heat exchange medium cooled by the radiator 82 to the first pipe 101 when the respective battery units 53 included in the first battery group 53G1 and the second battery group 53G2 are cooled.

From the viewpoint of enabling the fourth pipe connection battery units 53Q to be preferentially heated by supplying the high-temperature heat exchange medium to the fourth pipe connection battery units 53Q before being supplied to the first pipe connection battery units 53P, it is desirable that the switching valve 95 switches the supply destination of the heat exchange medium heated by the heater 94 to the fourth pipes 104 when the battery units 53 are heated.

Although the hydraulic excavator 1 which is a construction machine is described above as an example of a work machine, the work machine is not limited to the hydraulic excavator 1, and may be another construction machine such as a wheel loader. In addition, the work machine may be an agricultural machine such as a combine and a tractor.

### [6. Appendices]

The hydraulic excavator 1 described in this embodiment can also be expressed as a work machine as described in the following appendices.

A work machine of Appendix (1) includes:
a battery unit;
a pipe which is connected to the battery unit and through which a heat exchange medium flows; and
a heat exchanger to which the pipe is connected, wherein
the heat exchanger is disposed on a side opposite to a side of the battery unit which is connected to the pipe, with respect to the battery unit.

According to a work machine of Appendix (2), in the work machine mentioned in Appendix (1),
the battery unit has a connection port, to which the pipe is connected, on one side surface thereof, and
the heat exchanger is disposed on a side surface side opposite to the one side surface of the battery unit.

According to a work machine of Appendix (3), in the work machine mentioned in Appendix (2),
the connection port includes a first connection port and a second connection port, and
the first connection port and the second connection port are connected to one end and the other end of a circuit for circulating the heat exchange medium in the battery unit, respectively.

According to a work machine of Appendix (4), the work machine mentioned in Appendix (3) including
a plurality of the battery units, wherein
the plurality of battery units are disposed such that the respective one side surfaces are directed in the same direction.

According to a work machine of Appendix (5), in the work machine mentioned in Appendix (4),
the pipe has:
a first common pipe that extends from the heat exchanger;
first individual pipes that are connected to the first common pipe via a branch part, and extend from the respective first connection ports of a plurality of the battery units;
a second common pipe that extends from the heat exchanger; and
second individual pipes that are connected to the second common pipe via a merge part, and extend from the respective second connection ports of a plurality of the battery units.

According to a work machine of Appendix (6), in the work machine mentioned in Appendix (5),
the second connection ports are located above the first connection ports, and
the second common pipe is disposed above the battery units.

According to a work machine of Appendix (7), in the work machine mentioned in Appendix (5) or Appendix (6),
the first common pipe is routed to pass through outside of the battery units as viewed from above.

According to a work machine of Appendix (8), in the work machine mentioned in any of Appendix (1) to Appendix (7) further including
a circulation pump disposed in a middle of the pipe, wherein
the circulation pump is disposed on a downstream side in a flow direction of the heat exchange medium with respect to the heat exchanger.

According to a work machine of Appendix (9), the work machine mentioned in any of Appendix (1) to Appendix (8) further including
a heater disposed in a middle of the pipe.

According to a work machine of Appendix (10), the work machine mentioned in Appendix (2) or Appendix (3) comprising:
a first battery group having a plurality of the battery units;
a second battery group having a plurality of the battery units; and
a temperature adjustment circuit that adjusts a temperature of the heat exchange medium, wherein
all the battery units included in the first battery group and the second battery group are disposed such that the respective one side surfaces are directed in the same direction, and
the pipe includes:
   a first pipe that connects any of the battery units included in the first battery group and any of the battery units included in the second battery group to the temperature adjustment circuit;
   a second pipe that connects the plurality of battery units included in the first battery group in series;
   a third pipe that connects the plurality of battery units included in the second battery group in series; and
   a fourth pipe that connects an other battery unit included in the first battery group and an other battery unit included in the second battery group to the temperature adjustment circuit.

According to a work machine of Appendix (11), in the work machine mentioned in Appendix (10),
the temperature adjustment circuit includes the heat exchanger, and a heater, and
when the battery unit to which the first pipe is connected among a plurality of the battery units included in the first battery group and the battery unit to which the first pipe is connected among a plurality of the battery units included in the second battery group are each defined as a first pipe connection battery unit, and
an other battery unit to which the fourth pipe is connected among a plurality of the battery units included in the first battery group and an other battery unit to which the fourth pipe is connected among a plurality of the battery units included in the second battery group are each defined as a fourth pipe connection battery unit,
the two first pipe connection battery units are disposed between the two fourth pipe connection battery units.

According to a work machine of Appendix (12), in the work machine mentioned in Appendix (11),
the temperature adjustment circuit further includes a switching valve that switches a supply destination of the heat exchange medium from the heat exchanger or the heater between the first pipe and the fourth pipe, and
the switching valve switches the supply destination of the heat exchange medium cooled by the heat exchanger to the first pipe when the respective battery units included in the first battery group and the second battery group are cooled.

According to a work machine of Appendix (13), in the work machine mentioned in Appendix (12),
the switching valve switches the supply destination of the heat exchange medium heated by the heater to the fourth pipe when the battery units are heated.

The embodiments of the present invention are described above, but the scope of the present invention is not limited thereto, and can be carried out within an extended or modified range without departing from the gist of the present invention.

### INDUSTRIAL APPLICABILITY

The present invention can be used for a work machine such as a construction machine and an agricultural machine, for example.

### REFERENCE SIGNS LIST

1 hydraulic excavator (work machine)
53 battery unit
53-1 first battery unit
53-2 second battery unit
53-3 third battery unit
53-4 fourth battery unit
53G1 first battery group
53G2 second battery group
53L left side surface (one side surface)
53P first pipe connection battery unit
53Q fourth pipe connection battery unit
53R right side surface (side surface on opposite side)
82 radiator (heat exchanger)
90 pipe
91a first common pipe
91b branch part
91c first individual pipe
92a second common pipe
92b merge part
92c second individual pipe
93 circulation pump
94 heater
95 switching valve
101 first pipe
101a first connection pipe
101b first connection part
101c second connection pipe
102 second pipe
103 third pipe
104 fourth pipe
104a third connection pipe
104b second connection part
104c fourth connection pipe
200 temperature adjustment circuit
530 connection port
531 first connection port
532 second connection port

## Claims

1. A work machine comprising:
a battery unit;
a pipe which is connected to the battery unit and through which a heat exchange medium flows; and
a heat exchanger to which the pipe is connected,
wherein
the heat exchanger is disposed on a side opposite to a side of the battery unit which is connected to the pipe, with respect to the battery unit.

2. The work machine according to claim 1, wherein
the battery unit has a connection port, to which the pipe is connected, on one side surface thereof, and
the heat exchanger is disposed on a side surface side opposite to the one side surface of the battery unit.

3. The work machine according to claim 2, wherein
the connection port includes a first connection port and a second connection port, and
the first connection port and the second connection port are connected to one end and the other end of a circuit for circulating the heat exchange medium in the battery unit, respectively.

4. The work machine according to claim 3, comprising
a plurality of the battery units, wherein
the plurality of battery units are disposed such that the respective one side surfaces are directed in the same direction.

5. The work machine according to claim 4, wherein
the pipe has:
a first common pipe that extends from the heat exchanger;
first individual pipes that are connected to the first common pipe via a branch part, and extend from the respective first connection ports of a plurality of the battery units;
a second common pipe that extends from the heat exchanger; and
second individual pipes that are connected to the second common pipe via a merge part, and extend from the respective second connection ports of the plurality of battery units.

6. The work machine according to claim 5, wherein
the second connection ports are located above the first connection ports, and
the second common pipe is disposed above the battery units.

7. The work machine according to claim 5, wherein
the first common pipe is routed to pass through outside of the battery units as viewed from above.

8. The work machine according to claim 1, further comprising
a circulation pump disposed in a middle of the pipe, wherein
the circulation pump is disposed on a downstream side in a flow direction of the heat exchange medium with respect to the heat exchanger.

9. The work machine according to claim 1, further comprising
a heater disposed in a middle of the pipe.

10. The work machine according to claim 2, comprising:
a first battery group having a plurality of the battery units;
a second battery group having a plurality of the battery units; and
a temperature adjustment circuit that adjusts a temperature of the heat exchange medium, wherein
all the battery units included in the first battery group and the second battery group are disposed such that the respective one side surfaces are directed in the same direction, and
the pipe includes:
a first pipe that connects any of the battery units included in the first battery group and any of the battery units included in the second battery group to the temperature adjustment circuit;
a second pipe that connects the plurality of battery units included in the first battery group in series;
a third pipe that connects the plurality of battery units included in the second battery group in series; and
a fourth pipe that connects an other battery unit included in the first battery group and an other battery unit included in the second battery group to the temperature adjustment circuit.

11. The work machine according to claim 10, wherein
the temperature adjustment circuit includes the heat exchanger, and a heater, and
when the battery unit to which the first pipe is connected among the plurality of battery units included in the first battery group and the battery unit to which the first pipe is connected among the plurality of battery units included in the second battery group are each defined as a first pipe connection battery unit, and
an other battery unit to which the fourth pipe is connected among the plurality of battery units included in the first battery group and an other battery unit to which the fourth pipe is connected among the plurality of battery units included in the second battery group are each defined as a fourth pipe connection battery unit,
the two first pipe connection battery units are disposed between the two fourth pipe connection battery units.

12. The work machine according to claim 11, wherein
the temperature adjustment circuit further includes a switching valve that switches a supply destination of the heat exchange medium from the heat exchanger or the heater between the first pipe and the fourth pipe, and
the switching valve switches the supply destination of the heat exchange medium cooled by the heat exchanger to the first pipe when the respective battery units included in the first battery group and the second battery group are cooled.

13. The work machine according to claim 12, wherein
the switching valve switches the supply destination of the heat exchange medium heated by the heater to the fourth pipe when the battery units are heated.
